# EUROPÄISCHE PATENTSCHRIFT

(11) **EP 0 803 522 B1**
(45) Veröffentlichungstag und Bekanntmachung des Hinweises auf die Patenterteilung: **29.12.1999**
(21) Anmeldenummer: 97105876.3
(22) Anmeldetag: 10.04.1997
(51) Int. Cl.: C08G 18/10, C08G 18/18, C08G 18/22

(54) **Verfahren zur Herstellung von Formkörpern aus Polyurethanschaumstoffen nach dem Reaktions-Spritzguss-Verfahren**
Process for the preparation of moulded articles according to the RIM process
Procédé pour la fabrication d'articles moulés selon le procédé RIM

(30) Priorität: 23.04.1996 DE 19616082
(43) Veröffentlichungstag der Anmeldung: 29.10.1997
(73) Patentinhaber: BAYER AG, 51368 Leverkusen (DE)
(72) Erfinder: Haas, Peter, Dr., 42781 Haan (DE); Neuhaus, Alfred, 42799 Leichlingen (DE); Ruckes, Andreas, Dr., 40764 Langenfeld (DE)

(56) Entgegenhaltungen:
- GB-A- 2 107 336
- US-A- 5 459 170

## Beschreibung

Für Kunststoffe, die im Bereich der Lebensmittelherstellung eingesetzt werden, gelten besondere Kriterien, die in Lebensmittel- und Bedarfsgegenstände-Gesetzen niedergelegt sind. Hierunter fallen z.B. Kunststoffteile wie Trichter, Siebe, Siebumrandungen, Transportrohre, Schütteleinrichtungen u.v.a. mehr. Für den Bereich der Polyurethankunststoffe bedeutet dies, daß bestimmte Ausgangskomponenten und Additive nicht verwendet werden können. Wegen ihrer guten mechanischen Eigenschaften werden PUR-Formteile höherer Rohdichte gerne als Siebe oder als komplette Siebeinheit eingesetzt und bei der Siebung von Mahlgut verwendet. Ein mögliches Mahlgut ist beispielsweise Mehl.

Durch die Verwendung im Lebensmittelbereich sind bestimmte Rohstoffe dann ausgenommen. So sind auf der Seite der Isocyanate nur lineare Grundtypen wie das monomere Diphenylmethandiisocyanat und hieraus aufgebaute Prepolymere zugelassen. Auf der Seite der Aktivatoren entfallen Amine und Schwermetallaktivatoren gänzlich. Hierdurch werden die üblichen Möglichkeiten zur Einstellung der Reaktionsparameter wie das Liege-, Fließ- und Abbindeverhalten stark eingeengt, aber auch die mechanischen Eigenschaften nachhaltig beeinflußt. Um zu einem zügigen Aufbau eines Biege-E-Moduls mit relativ kurzen Entformungszeiten zu kommen, sind Isocyanatfunktionalitäten deutlich über 2,0 üblich.

Aufgabe der vorliegenden Erfindung war es, mit den im Lebensmittelbereich zulässigen Polyurethan-Rohstoffen Werkstoffe mit hohem Biege-E-Modul, gutem Fließverhalten und kurzen Formstandzeiten zur Verfügung zu stellen.

Es wurde nun für den Lebensmittelbereich geeignete PUR-Werkstoffe mit
hohem Biege-E-Modul,
gutem Fließverhalten in komplizierten Formen und
kurzen Formstandzeiten gefunden.

Gegenstand der vorliegenden Erfindung ist ein Verfahren zur Herstellung von PUR-Formkörpern nach dem Reaktions-Spritzgieß-Verfahren mit kompakter Oberfläche aus
A1) mindestens einem Isocyanatgruppen aufweisenden Prepolymeren mit einem NCO-Gehalt von 15 bis 32 Gew.-% aus
   i) einer bifunktionellen Isocyanatkomponente der Diphenylmethanreihe und
   ii) einer Polyolkomponente mit einem mittleren Molekulargewicht von 62 bis 1.000 der Funktionalität 2,0,
A2) einer bifunktionellen Isocyanatkomponente der Diphenylmethanreihe mit einem NCO-Gehalt von 28 bis 33,6 Gew.-%,
B1) mindestens einer Polyolkomponente der Funktionalität 2 bis 6 und einer mittleren Molmasse von 2.000 bis 10.000,
B2) mindestens einer Polyolkomponente der Funktionalität 3 bis 8, bevorzugt 4 bis 6, mit einer mittleren Molmasse von 92 bis 1.999,
C) Wasser und/oder organischen Treibmitteln,
D) Stabilisatoren bekannter Art,
E) an sich bekannten Hilfs- und Zusatzstoffen,
dadurch gekennzeichnet, daß als Aktivatoren
F) Alkalicarboxylate und
G) acide Gruppen enthaltende Verbindungen mit einer Säurezahl von 20 bis 1.000, bevorzugt 20 bis 500, und als Polyolkomponente
B2) mindestens ein tertiäres Stickstoffatom, bevorzugt 2 tertiäre Stickstoffatome enthaltende Polyole der Funktionalität 3 bis 8, bevorzugt 4 bis 6
eingesetzt werden.

Bei alleiniger Verwendung zeigt die Komponente F) ein ausgesprochen schlechtes Fließverhalten. Erst durch Kombination mit Komponente G) und Polykomponente B2) resultiert überraschenderweise ein gutes Fließverhalten, gute Biege-E-Modulen und kurze Entformungszeiten.

Bei der Komponente A1) handelt es sich um Isocyanatkompositionen aus Polyisocyanaten oder Isocyanatprepolymeren mit einem NCO-Gehalt von 15 bis 32 Gew.-%, wobei die Komponente i) Diphenylmethandiisocyanat und die Komponente ii) Glykole oder Ethergruppen enthaltende Glykole wie Di-, Tri- oder Tetrapropylenglykol und A2) Diphenymethandiisocyanaten mit einem NCO-Gehalt von 28 bis 33,6 % darstellt. Neben Urethan- kann die Komponente A) auch Carbodiimidgruppen enthalten.

Bei der Komponente B1) handelt es sich um Polyole der Funktionalität 2 bis 6 und einer mittleren Molmasse von 2.000 bis 10.000 mit primären oder sekundären OH-Gruppen, wobei überwiegend inaktive OH-Gruppen bevorzugt sind. Bei der Polyolkomponente B2) werden Polyole mit einer Funktionalität von 3 bis 8, bevorzugt 4 bis 6, die durch Alkoxylierung von primären Diaminen oder deren höheren Homologen wie Ethylendiamin, Diethylentriamin, Triethylentetramin erhalten werden eingesetzt. Bevorzugt sind auch hier sekundäre OH-Gruppen in der Polyolkomponente B2). Verwendbar sind auch von Monoaminen abgeleitete Hydroxykomponenten wie z.B. Triisopropanolamin oder höhere Ethylenoxidadukte vom Ammoniak.

Die Komponente B2) wird in Mengen von 40 bis 90 Gew.-%, bevorzugt 50 bis 80 Gew.-% bezogen auf 100 Teile der Komponenten B1 und B2 verwendet.

Bei den einzusetzenden Aktivatoren F) handelt es sich um vornehmlich glykolische Lösungen von Alkalicarboxylaten wie Natrium- und Kaliumsalze von Carbonsäuren mit 2 bis 30 Kohlenstoffatomen, bevorzugt 2 bis 10 Kohlenstoffatomen, wobei 0,1 bis 4,0 Gew.-Teile der reinen Stoffe bezogen auf 100 Gew.-Teile der Polyole B1,2 eingesetzt werden.

Bei der Komponente G) handelt es sich um acide Gruppen tragende Verbindungen mit Carbonsäuregruppen, organische Säuren des Phosphors und des Schwefels. Diese können durch Ester-, Amid- oder Urethangruppen modifiziert sein.

Geeignete organische Säuren des Phosphors sind beispielsweise C₄-C₁₈-Alkanphosphorsäuren, C₄-C₁₈-Dialkylphosphate wie Bis-(2-ethylhexyl)-phosphat.

Geeignete organische Säuren des Schwefels sind beispielsweise C₄-C₁₈-Alkansulfonsäuren, C₄-C₁₈-Schwefelsäuremonoalkylester oder aber Alkylarylderivate der Säuren.

Besonders bevorzugt werden gesättigte, ungesättigte oder mehrfach ungesättigte, gegebenenfalls funktionelle C₂-C₃₀-Mono-, Di- oder Polycarbonsäuren, insbesondere Ölsäure, Linolsäure, Linolensäure, Ricinolsäure, Polyricinolsäureester, freie Carboxylgruppen aufweisende Ester der Citronen-, Bernstein-, Äpfel-, Adipinsäure oder Umsetzungsprodukte von Carbonsäureanhydriden wie Phthalsäureanhydrid oder Maleinsäureanhydrid mit mehrwertigen Ether- oder Estergruppen aufweisenden Alkoholen eingesetzt.

Die Komponente F) wird in Mengen von 0,5 bis 15, bevorzugt 2 bis 10 Gew.-Teile, bezogen auf 100 Gew.-Teile Polyol B1,2 verwendet.

### Beispiele

### Ausgangsprodukte:

- Isocyanat 1:: Prepolymer aus Tripropylenglykol und 4,4'-Diphenylmethandiisocyanat mit einem NCO-Gehalt von 23 Gew.-%
- Isocyanat 2:: Gemisch aus 60 Gew.-Teilen 2,4'- und 40 Gew.-Teilen 4,4'-Diisocyanatodiphenylmethan
- Polyol 1:: Polyetherpolyol der OH-Zahl 45 aus 85 Gew.-% Propylenoxid und 15 Gew.-% Ethylenoxid mit Trimethylolpropan als Starter
- Polyol 2: (Komponente B):
Polyetherpolyol der OH-Zahl 640 durch Addition von Propylenoxid auf Ethylendiamin als Starter
- Polyol 3:: Desmophen VP.PU 1747 der Bayer AG

In für die Verarbeitung nach dem Reaktionsspritzgußverfahren üblichen Art werden die Komponenten zur Reaktion unter Hochdruckvermischung gebracht, wobei in eine auf 60°C beheizte Form der Größe 100 x 50 x 1 cm eingetragen wird:

### Beispiel 1

| | |
|---|---|
| Polyol 1 | 58 Gew.-Teile |
| Polyol 2 (Komponente B2) | 31 Gew.-Teile |
| Polyol 3 | 4,0 Gew.-Teile |
| Kaliumacetat, 25%ige Lösung in Dipropylenglykol (Komponente F) | 1,0 Gew.-Teile |
| Ölsäure (Komponente G) | 4,0 Gew.-Teile |
| Stabilisator B 8411 der Goldschmidt AG | 1,7 Gew.-Teile |
| Wasser | 0,18 Gew.-Teile |
| Isocyanat 1 | 100 Gew.-Teile |
| Isocyanat 2 | 25 Gew.-Teile |

| Mechanische Eigenschaften: | |
|---|---|
| Rohdichte | 790 kg·m ⁻³ |
| Fließverhalten | vollständige Formausfüllung |
| Entformungszeit | 190 sec. |
| Biege-E-Modul | 1300 MPa (DIN 53 423) |

In den Beispielen 2-6 wurden mit Ausnahme von Komponente G die für Beispiel 1 angegebenen Ausgangskomponenten eingesetzt. Komponente G wurde in den Beispielen 2-6 jeweils variiert.

### Beispiel 2

Komponente G): 5,5 Gew.-Teile Polyricinolsäure der Säurezahl 60

| Mechanische Eigenschaften: | |
|---|---|
| Rohdichte | 800 kg·m³ |
| Fließverhalten | vollständige Formausfüllung |
| Entformungszeit | 180 sec. |
| Biege-E-Modul | 1320 MPa (DIN 53 423) |

### Beispiel 3

Komponente G: 6,0 Gew.-Teile eines Umsetzungsproduktes aus Polypropylenglykol der OH-Zahl 112 und Maleinsäureanhydrid mit einer Säurezahl von 95

| Mechanische Eigenschaften: | |
|---|---|
| Rohdichte | 795 kg·m⁻³ |
| Fließverhalten | vollständige Formausfüllung |
| Entformungszeit | 170 sec. |
| Biege-E-Modul | 1290 MPa (DIN 53 423) |

### Beispiel 4

Komponente G): 5,5 Gew.-Teile Citronensäuredibutylester der Säurezahl 185

| Mechanische Eigenschaften: | |
|---|---|
| Rohdichte | 810 kg·m⁻³ |
| Fließverhalten | vollständige Formausfüllung |
| Entformungszeit | 195 sec. |
| Biege-E-Modul | 1310 MPa (DIN 53 423) |

### Beispiel 5

Komponente G): 5,0 Gew.-Teile Bis-(2-ethylhexyl)-phosphat der Säurezahl 175

| Mechanische Eigenschaften: | |
|---|---|
| Rohdichte | 800 kg·m⁻³ |
| Fließverhalten | problemlose Formausfüllung |
| Entformungszeit | 180 sec. |
| Biege-E-Modul | 1300 MPa (DIN 53 423) |

### Beispiel 6 (Vergleich)

In Beispiel 1 wurde auf die Komponente G) verzichtet;

| | |
|---|---|
| Fließverhalten | keine Formausfüllung |

Nur in Kombination der erfindungswesentlichen Komponenten B2), G) und F) werden Formfüllung, kurze Entformungszeiten bei hohem E-Modul erreicht.

## Patentansprüche

1. Verfahren zur Herstellung von Formkörpern aus Polyurethanschaumstoffen nach dem Reaktionsspritzgußverfahren durch Umsetzung von
A1) einem Isocyanatgruppen aufweisenden Semiprepolymeren mit einem NCO-Gehalt von 15 bis 31 Gew.-% durch Umsetzung von
i) einer bifunktionellen Isocyanatkomponente der Diphenylmethanreihe und
ii) einer Polyolkomponente mit einem mittleren Molekulargewicht von 62 bis 1.000 der Funktionalität 2,0 und
A2) einer bifunktionellen Isocyanatkomponente der Diphenylmethanreihe mit einem NCO-Gehalt von 28 bis 33,6 %,
B1) mindestens einer Polyolkomponente der Funktionalität 2 bis 6 und einem mittleren Molekulargewicht von 2.000 bis 10.000,
B2) mindestens einer Polyolkomponente der Funktionalität 3 bis 8, bevorzugt 4 bis 6, mit einer mittleren Molmasse von 92 bis 1.999,
C) Wasser und gegebenenfalls organischen Treibmitteln,
D) Stabilisatoren,
E) an sich bekannten Hilfs- und Zusatzstoffen,
dadurch gekennzeichnet, daß als Aktivatoren
F) Alkalicarboxylate
G) acide Gruppen aufweisende Verbindungen mit einer Säurezahl von 20 bis 1.000, bevorzugt 20 bis 500, und als Polyolkomponente
B2) mindestens ein tertiäres Stickstoffatom enthaltende Polyole der Funktionalität 3 bis 8
eingesetzt werden.

2. Verfahren nach Anspruch 1, dadurch gekennzeichnet, daß als AlkalicarboxylatAktivatoren F) Natrium- oder Kaliumsalze von Mono- oder Dicarbonsäuren mit 2 bis 30 Kohlenstoffatomen, eingesetzt werden.

3. Verfahren nach Anspruch 1 und 2, dadurch gekennzeichnet, daß als Komponente G) gegebenenfalls durch Ester-, Amid- oder Urethangruppen modifizierte Mono-, Di- oder Polycarbonsäuren, organische Säuren des Schwefels oder Phosphors eingesetzt werden.

4. Verfahren nach Anspruch 1, dadurch gekennzeichnet, daß als Komponente G) gesättigte, ungesättigte oder mehrfach ungesättigte, gegebenenfalls funktionelle Gruppen tragende C₂-C₃₀-Mono, Di- oder Polycarbonsäuren eingesetzt werden.

5. Verwendung der gemäß Anspruch 1 bis 4 hergestellten Polyurethanformkörper im Lebensmittel- und Bedarfsgegenständebereich.

## Claims

1. Process for the production of mouldings from polyurethane foams using the reaction injection moulding process by reacting
A1) a semiprepolymer containing isocyanate groups and having an NCO content of 15 to 31 wt.% by reacting
i) a difunctional isocyanate component of the diphenylmethane series and
ii) a polyol component having an average molecular weight of 62 to 1000 of a functionality of 2.0 and
A2) a difunctional isocyanate component of the diphenylmethane series having an NCO content of 28 to 33.6%,
B1) at least one polyol component of a functionality of 2 to 6 and an average molecular weight of 2000 to 10000,
B2) at least one polyol component of a functionality of 3 to 8, preferably of 4 to 6, having an average molecular weight of 92 to 1999,
C) water and optionally organic blowing agents,
D) stabilisers,
E) *per* se known auxiliary substances and additives,
characterised in that the activators used are
F) alkali metal carboxylates
G) compounds containing acidic groups and having an acid value of 20 to 1000, preferably of 20 to 500, and the polyol component used comprises
B2) polyols containing at least one tertiary nitrogen atom and of a functionality of 3 to 8.

2. Process according to claim 1, characterised in that the alkali metal carboxylate activators F) used are sodium or potassium salts of mono- or dicarboxylic acids having 2 to 30 carbon atoms.

3. Process according to claims 1 and 2, characterised in that the component G) used comprises optionally ester, amide or urethane group modified mono-, di- or polycarboxylic acids, organic acids of sulfur or phosphorus.

4. Process according to claim 1, characterised in that the component G) used comprises saturated, unsaturated or polyunsaturated, C₂-C₃₀ mono-, di- or polycarboxylic acids, optionally bearing functional groups.

5. Use of the polyurethane mouldings produced according to claims 1 to 4 in the foodstuffs and consumable goods sectors.

## Revendications

1. Procédé pour la fabrication de corps moulés constitués par des mousses de polyuréthanne conformément au procédé de moulage réactif par injection, par mise en réaction de
A1) un semi-prépolymère présentant des groupes isocyanate, dont la teneur en groupes NCO s'élève de 15 à 31% en poids, obtenu par mise en réaction de
i) un composant d'isocyanate bifonctionnel de la série des diphénylméthanes et
ii) un composant de polyol possédant un poids moléculaire moyen de 62 à 1.000 et une fonctionnalité de 2,0, et
A2) un composant d'isocyanate bifonctionnel de la série des diphénylméthanes, dont la teneur en groupes NCO s'élève de 28 à 33,6%,
B1) au moins un composant de polyol possédant une fonctionnalité de 2 à 6 et un poids moléculaire moyen de 2.000 à 10.000,
B2) au moins un composant de polyol possédant une fonctionnalité de 3 à 8, de préférence de 4 à 6 et possédant une masse molaire moyenne de 92 à 1.999,
C) de l'eau et, le cas échéant, des agents moussants organiques,
D) des stabilisateurs,
E) des adjuvants et des additifs connus en soi,
caractérisé en ce qu'on met en oeuvre, à titre d'activateurs,
F) des carboxylates de métaux alcalins,
G) des composés présentant des groupes acides, possédant un indice d'acide de 20 à 1.000, de préférence de 20 à 500, et à titre de composant de polyol
B2) des polyols contenant au moins un atome d'azote tertiaire, possédant une fonctionnalité de 3 à 8.

2. Procédé selon la revendication 1, caractérisé en ce qu'on met en oeuvre, à titre de carboxylates de métaux alcalins faisant office d'activateur F), des sels de sodium ou de potassium d'acides mono- ou dicarboxyliques contenant de 2 à 30 atomes de carbone.

3. Procédé selon les revendications 1 et 2, caractérisé en ce qu'on met en oeuvre, à titre de composant G), des acides monocarboxyliques, dicarboxyliques ou polycarboxyliques le cas échéant modifiés à l'aide de groupes ester, de groupes amide ou de groupes uréthane, des acides organiques du soufre ou du phosphore.

4. Procédé selon la revendication 1, caractérisé en ce qu'on met en oeuvre, à titre de composant G), des acides monocarboxyliques, dicarboxyliques ou polycarboxyliques en C₂-C₃₀ saturés, insaturés ou plusieurs fois insaturés, portant le cas échéant des groupes fonctionnels.

5. Utilisation des corps moulés à base de polyuréthanne fabriqués conformément aux revendications 1 à 4, dans le domaine des denrées alimentaires et des objets de consommation.
